# EUROPÄISCHE PATENTANMELDUNG

(11) **EP 4 844 711 A1**
(43) Veröffentlichungstag der Anmeldung: **25.11.2026**
(21) Anmeldenummer: 26179537.1
(22) Anmeldetag: 19.05.2026
(51) Int. Cl.: G06V 40/16, G06V 10/98, G06V 10/141

(54) **VERFAHREN UND VORRICHTUNG ZUM BESTIMMEN VON BILDDATEN FÜR EIN BIOMETRISCHES BILD MIT VERMINDERTEN REFLEXIONEN**

(30) Priorität: 21.05.2025 DE 102025001775
(71) Anmelder: Bundesdruckerei GmbH, 10969 Berlin (DE)
(72) Erfinder: Dr. Peters, Florian, 10969 Berlin (DE); Sauer, Tatjana, 10969 Berlin (DE)

(57) **Zusammenfassung**

Die Erfindung betrifft ein Verfahren zum automatisierten Erstellen eines digitalen biometrischen Bildes von dem Gesicht einer Person (202) sowie eine Bilderzeugungsvorrichtung zur Ausführung des Verfahrens. Um Reflexionen in dem Bild zu mindern oder zu beseitigen, ist erfindungsgemäß vorgesehen, dass mittels der Bilddaten einer in dem Bild und/oder der Bildfolge abgebildete Reflexion (224) bestimmt wird und Steuerdaten zur Ausführung eines Korrekturverfahrens zur Minderung oder Beseitigung der Reflexion (224) erzeugt werden.

## Beschreibung

Die Erfindung betrifft ein Verfahren und eine Vorrichtung zum automatisierten Erstellen eines digitalen biometrischen Bildes von dem Gesicht einer Person, die ein digitales biometrisches Passbild für ein Sicherheitsdokument repräsentieren, sowie eine Vorrichtung für das Verfahren.

Personen können mittels dafür entwickelter Vorrichtungen anhand von biometrischen Merkmalen identifiziert werden. Dies geschieht insbesondere auf Grundlage von biometrischen Merkmalen des Gesichtes. Biometrische Merkmale sind z.B. in Sicherheitsdokumenten wie beispielsweise Ausweisen oder Pässen mit biometrischen Passbildern hinterlegt. Mittels eines biometrischen Passbildes ist das Sicherheitsdokument personalisiert und ermöglicht ein Identifizieren der Person.

Zum Bestimmen von Passbilddaten, die ein digitales biometrisches Passbild einer Person repräsentieren, werden üblicherweise Einzelbildaufnahmen einer Person mittels einer Kameravorrichtung erfasst. Wird nach einer erfolgten Bildaufnahme festgestellt, dass ein oder mehrere Eignungskriterien für die Eignung als biometrisches Passbild nicht erfüllt sind, können weitere Einzelbildaufnahmen folgen.

Mit dem Dokument EP 1 413 972 A1 wird ein Prüfverfahren für digitale Personenaufnahmen bereitgestellt, sowie Vorrichtungen zur Durchführung des Verfahrens. Das Verfahren ist insbesondere zum Überprüfen der Eignung einer Personenaufnahme für eine Personenidentifizierung verwendbar. Es umfasst die Schritte: Segmentieren der Personenaufnahme in einen Hintergrundbereich und einen Kopf- oder Gesichtsbereich, Analysieren des Kopf- oder Gesichtsbereichs, um wenigstens einen Kennwert zu ermitteln, Vergleichen des wenigstens einen Kennwerts mit wenigstens einem vorbestimmten Schwellwert.

Die Dokumente DE 10 2013 203 433 A1 und US 2016 / 012279 A1 betreffen eine Vorrichtung zur Erfassung personenspezifischer Daten einer Person, wobei die personenspezifischen Daten ein Gesichtsbild der Person umfassen. Die Vorrichtung weist eine Kamera zur Aufnahme des Gesichtsbildes der Person und eine Beleuchtungseinrichtung. Die Beleuchtungseinrichtung ist für eine frontseitige Beleuchtung der Person ausgebildet. Die Vorrichtung weist ferner eine Steuerungseinheit auf zur Durchführung einer Bilderfassung, wobei Licht durch die Beleuchtungseinrichtung zur Beleuchtung des Gesichts der Person erzeugt wird.

In den Dokumenten US 2013 / 215275 A1 und US 2016 / 154991 A1 ist ein biometrischer Identitätsregistrierungskiosk zum Sammeln persönlicher Daten beschrieben. Die Vorrichtung umfasst einen Prozessor und eine oder mehrere mit dem Prozessor gekoppelte biometrische Erfassungsvorrichtungen, die eine Gesichtskamera umfassen können. Beidseitig neben der Gesichtskamera sind Beleuchtungseinrichtungen angeordnet, mit welchen eine ausreichende Belichtung sichergestellt wird.

Das Dokument US 2019 / 082100 A1 beschreibt ein Verfahren zur Aufnahme eines Fotos zur Verwendung in einem Lichtbildausweis. Das Verfahren umfasst die Verwendung eines digitalen Bilderfassungssystems mit einer Digitalkamera, einem Computerprozessor und einem Speicher zum Speichern von Anforderungen für einen Fotodruck, um die Konformität zur Verwendung in einem vom Nutzer ausgewählten Lichtbildausweis, z. B. einem Reisepass für ein ausgewähltes Land oder eine ausgewählte Gerichtsbarkeit sicherzustellen. Zur automatischen Erkennung eines Gesichts und Gesichtsmerkmalspunkten auf dem Gesichtsbild finden Gesichtsbildverarbeitungstechniken Anwendung. Für die Ausleuchtung der Person und zum Ausgleich unregelmäßiger Umgebungsbeleuchtung wird eine Vielzahl von Lichtquellen vorgeschlagen.

Das Dokument DE 10 2021 114402 A1 offenbart ein Verfahren zur Bestimmung eines digitalen biometrischen Passbilds für ein Sicherheitsdokument, bei dem die digitalen Bilddaten anhand von Eignungskriterien automatisch geprüft werden.

Ein Nachteil bekannter Verfahren und Vorrichtungen zur Bestimmung von Bilddaten für ein biometrisches Bild ist, dass Reflexionen, insbesondere Reflexionen von Lichtquellen, die auf den Bildsensor treffen, die Qualität des Bildes mindern bzw. das Bild unbrauchbar machen können. Die Reflexionen können bei der Aufnahme biometrischer Bilder insbesondere durch Licht stark reflektierende Gegenstände entstehen, die von der aufgenommenen Person am Körper getragen werden. Dies können z.B. Schmuck, Uhren oder Brillen sein. Eine besondere Bedeutung für das Auftreten von Reflexionen in biometrischen Gesichtsbildern haben Brillen, weil diese unmittelbar im Gesicht angeordnet sind und sowohl Brillengläser als auch Brillengestelle Licht reflektierende Flächen bilden können. Reflexionen, die von einer Beleuchtungseinrichtung der Vorrichtung zur Ausleuchtung der aufzunehmenden Person herrühren, können zwar durch eine weiter entfernte Anordnung der Lichtquelle vermieden werden. Damit geht jedoch ein erhöhter Raumbedarf einher, der bei beengten Platzverhältnissen nicht immer zur Verfügung steht.

Es ist daher die Aufgabe der vorliegenden Erfindung, ein Verfahren und eine Vorrichtung zum Bestimmen von Bilddaten für ein biometrisches Bild anzugeben, durch welche bei der Bildaufnahme auftretende Reflexionen mit geringem Raumbedarf gemindert und/oder beseitigt werden können.

Die Aufgabe wird durch die Merkmale der unabhängigen Patentansprüche gelöst. Weitere vorteilhafte Ausführungsformen sind Gegenstand der Beschreibung, der Figuren sowie der abhängigen Patentansprüche.

Soweit vorliegend die Begriffe "personalisiert" und "personalisierend" verwendet werden, so ist darunter die Eigenschaft eines Wert- oder Sicherheitsdokuments zu verstehen, der zufolge das Dokument einer bestimmten Person zuordenbar ist. Ein Wert- oder Sicherheitsdokument kann auch durch eine Vielzahl individualisierender Informationen personalisiert werden, wenn diese in Kombination die Zuordnung zu einer bestimmten Person erlauben.

Soweit vorliegend der Begriff "Nutzer" Verwendung findet, ist damit die Person gemeint, von der mittels des erfindungsgemäßen Verfahrens ein Bild erstellt wird. Der "Nutzer" entspricht somit der "Person" bzw. der "aufzunehmenden Person".

Gemäß einem ersten Aspekt der Erfindung umfasst das Verfahren zum automatisierten Erstellen eines biometrischen Bildes von dem Gesicht einer Person die folgenden Schritte: Zunächst wird eine Bilderzeugungsvorrichtung zum Bestimmen von Bilddaten, die ein digitales biometrisches Bild einer Person repräsentieren, bereitgestellt, mit einer Bildaufnahmeeinrichtung zum Aufnehmen von Bilddaten der Person. Mittels der Bildaufnahmeeinrichtung werden Bilddaten wenigstens eines Bildes und/oder einer Bildfolge der Person empfangen. Es folgt anhand der Bilddaten die Bestimmung einer in dem Bild abgebildeten Reflexion. Wurde eine Reflexion bestimmt, werden Steuerdaten zur Ausführung eines Korrekturverfahrens zur Minderung oder Beseitigung der Reflexion erzeugt. Nun werden Bilddaten wenigstens eines zweiten Bildes der Person empfangen.

Das zweite Bild stellt idealerweise ein Bild dar, in welchem die Reflexion des ersten Bildes reduziert bzw. beseitigt ist. Um dies sicherzustellen, können nun vorzugsweise die nach Empfang des ersten Bildes durchgeführten Verfahrensschritte wiederholt werden, d.h. wie bei dem ersten Bild kann nachfolgend bei dem zweiten Bild die Bestimmung einer in dem Bild abgebildeten Reflexion erfolgen und, sofern eine Reflexion vorhanden ist, können Steuerdaten zur Ausführung eines Korrekturverfahrens zur Minderung oder Beseitigung der Reflexion erzeugt werden.

Vorliegend wird unter einer Reflexion der von einem Gegenstand zurückgeworfene Licht verstanden. Dabei kann der Teil des auf einen Gegenstand fallenden Lichts, der zurückgeworfen wird, abhängig von der Beschaffenheit des Gegenstands unterschiedlich groß sein. Auch Spiegelungen, bei denen der Großteil bzw. nahezu das gesamte auf den Gegenstand fallende Licht reflektiert wird, werden vorliegend als Reflexionen verstanden.

Eine Reflexion, die gemäß der vorliegenden Erfindung bestimmt wird, ist insbesondere eine Reflexion, welche die Qualität der empfangenen Bilddaten über ein als zulässig definierte Maß hinaus mindert und/oder der Erfüllung von Qualitätskriterien für ein biometrisches Bild, beispielsweise von der ICAO (International Civil Aviation Organization) herausgegebenen Kriterien, entgegensteht und/oder Bereiche der aufzunehmenden Person, insbesondere im Gesicht der aufzunehmenden Person verfälscht oder unkenntlich macht.

Bei der Aufnahme eines Bildes können Reflexionen unterschiedlicher Ausprägung auftreten. Die Ausprägung einer Reflexion kann beispielsweise von der Gestalt des reflektierenden Gegenstandes, der Ausrichtung des Gegenstandes oder der Position des Gegenstandes an der Person beeinflusst sein. Vorliegend werden insbesondere solche Reflexionen bestimmt bzw. erkannt, bei denen am Ort ihrer Entstehung der Großteil des einfallenden Lichtes, insbesondere mehr als 90 % oder des einfallenden Lichtes oder nahezu das gesamte einfallende Licht reflektiert werden. Die Lichtquelle des einfallenden Lichts kann insbesondere von einer Beleuchtungseinrichtung gebildet sein. Entsprechend kann das Verfahren darauf ausgelegt sein, die Reflexion einer Lichtquelle einer Beleuchtungseinrichtung zu bestimmen.

Das Verfahren ist vorzugsweise ausgestaltet, biometrische Bilder einer Person mit Brille zu erstellen, insbesondere biometrische Passbilder. Entsprechend kann das Verfahren für die Erkennung von Reflexionen auf Brillen und deren Minderung oder Beseitigung optimiert sein.

Brillen können sowohl auf den Brillengläsern als auch auf dem Brillengestell reflektierende Flächen aufweisen. Brillentragende Personen sind auf ihre Brille als Sehhilfe angewiesen, so dass diese auch eine für Bedienung einer Vorrichtung der vorliegenden Art zwingend erforderlich sein und somit für den Aufnahmevorgang nicht abgenommen werden kann.

In weiteren Ausführungen des Verfahrens wird eine Bildfolge in Form eines Videostreams empfangen. Ein Videostream ermöglicht vorteilhaft eine Steuerung der Bildaufnahmeeinrichtung während des Empfangs von Bildern, bei der auf Bewegungen der aufzunehmenden Personen reagiert werden kann. Vorzugsweise werden die Bilddaten zur Erstellung eines digitalen biometrischen Bildes der Person dem Videostream entnommen. Die damit zur Verfügung stehende hochfrequente Aufnahme von Bildern ermöglicht eine größere Anzahl von Bildern, die für die nachfolgende Auswahl eines geeigneten Bildes zur Verfügung stehen.

In bevorzugten Ausgestaltungen der Erfindung wird für die Bestimmung einer Reflexion ein Maschinenlernalgorithmus verwendet, der die Bilddaten wenigstens eines Bildes, einer Bildfolge und/oder eines Videostreams als Eingangswerte erhält und die Reflexion und/oder die Reflexion charakterisierende Werte als Ausgangswerte ausgibt.

In dem erfindungsgemäßen Verfahren kann zunächst ein trainierter Maschinenlernalgorithmus bereitgestellt werden, der dazu trainiert ist, eine Reflexion, insbesondere eine Reflexion einer Lichtquelle, auf Basis eines Bildes oder einer Bildfolge einer Person zu bestimmen. In einem nachfolgenden Schritt erfolgt eine Anwendung des trainierten Algorithmus des maschinellen Lernens auf das eine bereitgestellte Bild oder die Bildfolge. Der Maschinenlernalgorithmus kann ein künstliches neuronales Netz, insbesondere ein faltendes neuronales Netz (Convolutional Neuronal Network bzw. CNN) sein. Der Maschinenlernalgorithmus mit kann Trainingsdaten, umfassend mehrere Bilder jeweils einer und/oder mehrerer verschiedener Personen mit unterschiedlichen Ausprägungen von Reflexionen, trainiert sein. Die Ausgangswerte des Maschinenlernalgorithmus können z.B. das Vorhandensein einer Reflexion, die Position der Reflexion und/oder die Intensität des reflektierten Lichtes sein.

Der Maschinenlernalgorithmus kann vorzugsweise ausgestaltet und trainiert sein, mit Bilddaten eines Videostreams als Eingangswerte die Bewegungen einer Reflexion zu bestimmen. Auf diese Weise kann, insbesondere bei zeitgleicher Ausführung des Korrekturverfahrens, bestimmt werden, auf welche Weise das Korrekturverfahren die Reflexion verändert. Beispielsweise kann bestimmt werden, ob sich die Reflexion aus dem Bild herausbewegt und/oder ob die Intensität des reflektierten Lichtes abnimmt oder zunimmt.

In weiteren Ausführungen der Erfindung kann das Verfahren eine Bewertung des Bildes nach einem oder mehreren Reflexionskriterien umfassen. Es kann insbesondere geprüft werden, ob das Bild wenigstens einem Reflexionskriterium genügt. Das wenigstens eine Reflexionskriterium bildet vorzugsweise ein Prüfkriterium zur Prüfung der Eignung des Bildes als biometrisches Passbild. Somit kann mittels vorbestimmter Werte geprüft werden, ob ein Bild aufgrund einer Reflexion ungeeignet ist oder noch in einem zulässigen Toleranzbereich liegt. Sollte das Bild dem wenigstens einen Reflexionskriterium nicht genügen, können Steuerdaten zur Ausführung eines Korrekturverfahrens erzeugt werden, um die Reflexion zu beseitigen oder zumindest zu mindern. Genügt das Bild dem wenigstens Reflexionskriterium beziehungsweise wird das wenigstens eine Reflexionskriterium erfüllt, kann ein Bilddatensatz auf Basis des mindestens einen Bildes erzeugt werden. Nach Ausführung des Korrekturverfahrens kann erneut die Erfüllung des wenigstens einen Reflexionskriteriums bestimmt werden, um bei Erfüllung des Reflexionskriteriums mit der Erstellung eines biometrischen Bildes fortzufahren oder bei Nichterfüllung die Ausführung eines weiteren Korrekturverfahrens zu starten.

In bevorzugten Ausführungen der Erfindung kann das wenigstens eine Reflexionskriterium eine oder mehrere der folgenden Eigenschaften umfassen: Das oder ein Reflexionskriterium kann das Vorhandensein einer Reflexion definieren. Dabei kann eine Reflexion als vorhanden oder als nicht vorhanden definiert werden. Weitere Reflexionskriterien können sein:
- Die Position der Reflexion, insbesondere in dem empfangenen Bild und/oder mit Bezug auf die aufgenommene Person. Befindet sich die Reflexion beispielsweise außerhalb des Gesichtes, kann das Reflexionskriterium als erfüllt bestimmt werden. Verdeckt die Reflexion in dem Bild hingegen ein biometrisches Merkmal, beispielsweise ein Auge und/oder ein biometrisches Landmark, kann das Reflexionskriterium als nicht erfüllt bestimmt werden;
- die Lichtintensität der Reflexion, insbesondere wie diese in der Bildaufnahmeeinrichtung empfangen wird und/oder im Verhältnis zu anderen Bereichen im Bild; die Ausdehnung der Reflexion, insbesondere im Bild;
- die aus der Belichtung resultierenden Eigenschaften des Bildes, beispielsweise der Dynamikumfang des Bildes. Auf diese Weise können aus der Belichtung resultierende Mängel, beispielsweise Überblendungen im Bild aufgrund einer Reflexion, vermieden werden.

Eines oder mehrere Reflexionskriterien können somit vorteilhaft eine differenziertere Auswahl eines Bildes ermöglichen. Es können folglich mehr Bilder als geeignet bestimmt werden und die Erstellung eines biometrischen Bildes wird insgesamt beschleunigt.

In vorteilhaften Weiterbildungen der Erfindung kann die Bilderzeugungsvorrichtung mit wenigstens einer Beleuchtungseinrichtung bereitgestellt werden, mit der die Person während des Empfangs des Bildes beleuchtet wird. Die Bilderzeugungsvorrichtung kann z.B. mit Beleuchtungseinrichtungen zur Beleuchtung der aufzunehmenden Person von oben, von unten und/oder von vorne bereitgestellt werden. Damit kann eine gute Ausleuchtung des Bildes erreicht werden. Die wenigstens eine Beleuchtungseinrichtung kann eine Vielzahl von Lichtquellen aufweisen, insbesondere LEDs, die einzeln ansteuerbar sind. Durch die vereinzelte Ansteuerung der Lichtquellen kann die Ausleuchtung der Person entsprechend der Lichtverhältnisse der Umgebung angepasst werden.

Gemäß weiteren Ausführungen der Erfindung kann als Teil des Korrekturverfahrens und/oder vor dem Empfangen des wenigstens einen ersten Bildes eine Einstellung der Beleuchtungseinrichtung erfolgen. Vorzugsweise kann die Helligkeit, die Position und/oder die Ausrichtung der Beleuchtungseinrichtung, insbesondere der Lichtquelle der Beleuchtungseinrichtung, angepasst werden. Wird die Beleuchtungseinrichtung mit einer Vielzahl von Lichtquellen, z.B. als LED-Panel bereitgestellt, kann die Anpassung durch ein Aktivieren und/oder Deaktivieren oder eine Einstellung der Leuchtintensität einzelner Lichtquellen erfolgen. Beispielsweise kann die Bilderzeugungsvorrichtung eine obere und eine untere Lichtquelle aufweisen, wobei im Rahmen der Einstellung der Beleuchtungseinrichtung die obere und/oder die untere Lichtquelle ausgeschaltet wird.

In einer Weiterbildung des Verfahrens kann als Teil des Korrekturverfahrens und/oder vor dem Empfangen des wenigstens einen ersten Bildes eine automatische Höheneinstellung der Bildaufnahmeeinrichtung und/oder der Beleuchtungseinrichtung erfolgen. Die Höhe der Bildaufnahmeeinrichtung und/oder der Beleuchtungseinrichtung wird vorzugsweise entsprechend der Größe der aufzunehmenden Person eingestellt. Dafür kann aus einer Speichereinrichtung der Bilderzeugungsvorrichtung eine Referenztabelle abgerufen werden, in welcher einer Größe der Person jeweils eine einzustellende Höhe zugeordnet sein kann. Dabei wird die einzustellende Höhe idealerweise mittels eines von der Bildaufnahmeeinrichtung empfangenen Bildes oder einer empfangenen Bildfolge bestimmt.

In weiteren bevorzugten Ausführungen des Verfahrens kann das Korrekturverfahren eine Veränderung der Position der Bildaufnahmeeinrichtung und/oder der Beleuchtungseinrichtung umfassen. Nachdem eine Reflexion aus den empfangenen Bilddaten bestimmt wurde, kann die Bildaufnahmeeinrichtung verfahren werden, insbesondere in einer Höhenrichtung, um die auf einen Bildaufnahmesensor auftreffende Reflexion zu mindern. Die Minderung Reflexion kann zum einen dadurch erfolgen, dass der Bildaufnahmesensor der Bildaufnahmeeinrichtung aus dem reflektierten Licht herausbewegt wird. Zum anderen kann mit der Bewegung der Bildaufnahmeeinrichtung auch eine Bewegung des Kopfes der aufzunehmenden Person bewirkt werden, wenn die Person der Bewegung der Bildaufnahmeeinrichtung folgt. Hebt die Person beispielsweise den Kopf an, führt dies auch zu einer Veränderung der Neigung der reflektierenden Fläche eines an dem Kopf der Person befindlichen reflektierenden Gegenstandes. Entsprechend ändern sich der Einfallswinkel sowie der Ausfallswinkel des reflektierten Lichtes.

Die Bildaufnahmeeinrichtung kann mit der Beleuchtungseinrichtung starr verbunden sein, beispielsweise über ein gemeinsames Gehäuse, um Platz und Material zu sparen. Entsprechend kann eine Positionsänderung der Bildaufnahmeeinrichtung gemeinsam mit einer Positionsänderung der Beleuchtungseinrichtung erfolgen. In alternativen Ausführungen können die Bildaufnahmeeinrichtung und/oder die Beleuchtungseinrichtung eine separate Positionseinstelleinrichtung aufweisen, insbesondere zur Einstellung der Höhe. Die Bildaufnahmeeinrichtung und/oder die Beleuchtungseinrichtung können separat in ihrer Position, insbesondere in ihrer Höhe verstellt werden.

Gemäß weiteren Ausführungen des Verfahrens kann das Korrekturverfahren eine Ausgabe einer Aufforderung mittels einer Anzeigeeinrichtung an die Person umfassen. Vorzugsweise kann die Person mit der Aufforderung aufgefordert werden, einen reflektierenden Gegenstand, insbesondere eine Brille, abzunehmen. Die Person kann mittels Aufforderung alternativ aufgefordert werden, den Kopf zu bewegen. Die Person kann beispielsweise mittels Bildern angeleitet werden, den Kopf in eine bestimmte Richtung zu neigen.

Die Aufforderung kann in Ausführungen des erfindungsgemäßen Verfahrens das erste Korrekturverfahren sein, für das Steuerdaten erzeugt werden. Somit kann die Aufforderung an die Person als erstes Korrekturverfahren in der Bilderzeugungsvorrichtung ausgeführt werden. Anschließend können erneut von Bilddaten wenigstens eines Bildes und/oder einer Bildfolge der Person mittels einer Bildaufnahmeeinrichtung empfangen werden und mittels der Bilddaten die in dem Bild und/oder der Bildfolge abgebildeten Reflexion bestimmt werden. Anschließend kann erneut bestimmt werden, ob das Bild wenigstens einem Reflexionskriterium genügt, wobei nur bei Nichtgenügen des wenigstens einen Reflexionskriteriums Steuerdaten zur Ausführung eines weiteren Korrekturverfahrens zur Minderung oder Beseitigung der Reflexion erzeugt werden. Auf diese Weise erfolgt die Beseitigung der Korrektur effizient und aufwandsarm.

In weiteren bevorzugten Ausführungen kann eine Aufforderung an die Person ausgegeben werden, einer auf der Anzeigeeinrichtung angezeigten Attraktion zu folgen. Die Anzeigeeinrichtung ist vorzugsweise ein Display. Die Attraktion kann durch ein grafisches Symbol gebildet sein. Das grafische Symbol ist vorzugsweise ausgestaltet, die Aufmerksamkeit der Person auf sich ziehen.

Das Verfahren umfasst vorzugsweise das Anzeigen eines grafischen Symbols auf einer für den Nutzer sichtbaren Oberfläche einer Anzeigeeinrichtung; das Aufnehmen mindestens eines Bildes von dem Gesicht des Nutzers mittels der Bildaufnahmeeinrichtung, während das grafische Symbol entlang eines vorgegebenen Bewegungspfads über die Oberfläche der Anzeigeeinrichtung bewegt wird; und Erzeugen eines Bilddatensatzes auf Basis des mindestens einen Bildes.

Mit anderen Worten, während der Nutzer dem Symbol auf der Oberfläche der Anzeigeeinrichtung folgt, sieht der Nutzer auch bei einer dem Symbol folgenden Neigung des Kopfes gleichzeitig in Richtung der Bildaufnahmeeinrichtung. Damit wird eine besonders symmetrisch frontale Ausrichtung des Gesichts in dem Bild erreicht.

In einigen Aspekten kennzeichnet sich das Verfahren durch Aufnehmen einer Vielzahl von Bildern von dem Gesicht des Nutzers an jeweils einem aufeinanderfolgenden Zeitpunkt während das grafische Symbol entlang des vorgegebenen Bewegungspfads über die Oberfläche der Anzeigeeinrichtung bewegt wird; durch Auswählen eines ausgewählten Bildes aus der Vielzahl von Bildern, welches mindestens einem vorbestimmten Reflexionskriterium genügt, und Erzeugen des Bilddatensatzes unter Verwendung des ausgewählten Bildes.

Die Vielzahl von Bildern kann in Form eines Videostreams aufgenommen werden, während sich das Symbol über die Oberfläche der Anzeigeeinrichtung bewegt. Die einzelnen Bilder können zumindest temporär abgespeichert werden. Indem sich die Ausrichtung des Kopfes des Nutzers während der Aufnahme verändert, insbesondere die Neigung des Kopfes, ändern sich die Eigenschaften einer vorhandenen Reflexion. Es kann bereits während der Bewegung des Nutzers geprüft werden, ob die Bewegung die erwünschte Wirkung erzielt, d.h. ob die Reflexion ab- oder zunimmt. Dies erfolgt vorzugsweise mittels des trainierten Maschinenlernalgorithmus. Dadurch, dass sich die Haltung des Nutzers entspannt, während sich das Symbol über die Oberfläche der Anzeigeeinrichtung bewegt, wird außerdem vorteilhaft eine Vielzahl an Bildern erzeugt, die jeweils das Gesicht in einer entspannten Pose zeigen.

Aus diesen Bildern kann dann ein Bild ausgewählt werden, welches dem wenigstens einen oder mehreren Reflexionskriterien genügt. Beispielsweise kann während des Auswahlprozesses mittels trainiertem Maschinenlernalgorithmus geprüft werden, ob weiterhin eine Reflexion vorhanden ist und/oder ob die Intensität des reflektierten Lichtes unter einem vorbestimmten Grenzwert liegt.

Das Bild, welches mindestens ein vorbestimmtes Reflexionskriterium erfüllt, wird ausgewählt und kann in Form eines Bilddatensatzes zur Authentifikation oder zur Hinterlegung in einem Sicherheitsdokument ausgewählt werden.

In besonders bevorzugten Ausführungen eines erfindungsgemäßen Verfahrens erfolgt vor der Bestimmung der Reflexion eine Posenkontrolle und/oder eine Posenkorrektur. In der Posenkontrolle wird die Pose des Nutzers vorzugsweise hinsichtlich einer Eignung für ein biometrisches Bild geprüft. Das Auftreten einer Reflexion kann von der Pose des Nutzers abhängen, bei einer Reflexion auf einer Brille beispielsweise von der Ausrichtung und Position der Brille und somit von der Pose bzw. der Position des Kopfes. Mit der Posenkontrolle vor der Bestimmung der Reflexion kann sichergestellt werden, dass das Korrekturverfahren zur Beseitigung oder Minderung einer Reflexion nicht aufgrund einer nachfolgenden Posenkorrektur wiederholt werden muss. Die Posenkorrektur erfolgt vorzugsweise auf Grundlage der Ergebnisse der Posenkontrolle. Weicht die Pose des Nutzers zu weit von einer Referenz ab, insbesondere von einer gewünschten Pose, die z.B. Kriterien der ICAO für biometrische Passbilder entspricht, kann eine Posenkorrektur erfolgen. Auch die Posenkorrektur erfolgt vorzugsweise vor der Bestimmung der Reflexion. Die Posenkorrektur umfasst ein mittels der Bilderzeugungsvorrichtung ausgeführtes Posenkorrekturverfahren, in dem der Nutzer motiviert, insbesondere aufgefordert wird, seine Pose anzupassen. Die Posenkorrektur kann insbesondere mittels einer Aufforderung an den Nutzer erreicht werden, z.B. mittels der Anzeigeeinrichtung und/oder akustisch. Der Nutzer kann beispielsweise aufgefordert werden, zentral in die Kamera zu blicken.

In einer Weiterbildung des Verfahrens kann es ermöglicht sein, eine verbesserte Posenkontrolle, insbesondere eine Kontrolle der Kopfausrichtung der Person, beim Bestimmen eines Bilddatensatzes für ein biometrisches Passbild bereitzustellen, indem aus einer Videobildaufnahme der Person ein Einzelbild ausgewählt wird, in welchem die Kopfpose der Person einer Referenz, insbesondere einer gewünschten Pose, am nächsten kommt. Insbesondere kann eine Posenkontrolle bereitgestellt sein, die nicht auf einer einfachen Symmetriekontrolle in einem Bild basiert, bei der lediglich ein (möglichst) gleicher Abstand einzelner paarweise erwarteter Landmarks, beispielsweise der Augenmitten, zu einer betreffenden Symmetriereferenz (beispielsweise die Nasenspitze) geprüft wird.

Die Posenkontrolle kann eine Prüfung der Übereinstimmung mit ICAO-Vorgaben umfassen. Es kann geprüft werden, ob die Bilddaten ein digitales biometrisches Bild in Übereinstimmung mit dem ICAO-Standard für Bilder für maschinenlesbare Sicherheitsdokumente bilden. Beispielsweise kann der Standard gemäß "Technical Report - Portrait Quality (Reference Facial Images for MRTD)" in der Version 1.0 aus April 2018 oder einer aktuelleren Fassung ausgeführt werden.

In besonders bevorzugten Aspekten umfasst das Auswählen eines Bildes jeweils: Bestimmen einer Mehrzahl von vorgegebenen biometrischen Landmarks in dem Bild; und/oder Aufteilen des Bildes in mehrere Sektoren, wobei das Aufteilen mittels wenigstens einer das Bild unterteilenden Begrenzungslinie erfolgt, welche durch eine vorgegebene Auswahl der biometrischen Landmarks verläuft; und/oder Bestimmen einer Landmark-Dichte für jeden der Sektoren, wobei die Landmark-Dichte jeweils dem Verhältnis aus der Anzahl der in dem betreffenden Sektor liegenden Landmarks zu der Fläche des Sektors entspricht, sowie Bestimmen eines Dichteverhältnisses zwischen Landmark-Dichten, die für innerhalb des Bildes gegenüberliegende Sektoren bestimmt wurden; und/oder Bestimmen eines Koordinatenpunkts für das Bild, wobei ein Koordinatenwert des Koordinatenpunkts dem Dichteverhältnis entspricht; Auswahl eines aktuellen Bilds aus der Vielzahl von Bildern; Ausführen einer Posenprüfung für das aktuelle Bild, wobei die Posenprüfung umfasst: Bestimmen, ob der Koordinatenpunkt in einem Toleranzbereich um einen Referenzpunkt liegt, der einer gewünschten Kopfausrichtung entspricht, wobei der Referenzpunkt insbesondere einen für den Nutzer individuellen Punkt darstellt; falls der Koordinatenpunkt nicht in dem Toleranzbereich liegt, Auswahl eines nächsten aktuellen Bilds für den Nutzer aus der Vielzahl von Bildern und Ausführen der Posenprüfung für das nächste aktuelle Bild; und falls der Koordinatenpunkt in dem Toleranzbereich liegt, Bestimmen des biometrischen Bildes als das ausgewählte Bild.

Das Bestimmen und Verarbeiten (biometrischer) Landmarks im Zusammenhang mit Bildern ist als solches bekannt. Hierbei handelt es sich um markante und/oder für die Gesichtserkennung relevante Punkte des Gesichts, wie es in dem betreffenden Bild wiedergegeben ist. Für die Bestimmung von Landmarks in Bildern sind verschiedene Algorithmen als solche bekannt. In bevorzugten Ausführungen des vorgeschlagenen Verfahrens wird für jedes der Bilder eine Mehrzahl von Landmarks bestimmt, wobei insbesondere eine Anzahl von mehr als 100 Landmarks bestimmt werden kann, bevorzugt mehr als 400 Landmarks, beispielsweise 468 Landmarks. Es kann eine Auswahl biometrischer Landmarks, vorgegeben sein. Hierunter ist eine Vorgabe zu verstehen, welche Punkte in einem Gesicht zu bestimmen sind, also beispielsweise Augenmitte, Nasenspitze, linke Schläfe, Kinn usw., wobei der Wert der Landmarks bzw. die Position der betreffenden Landmark in dem Bild ist nicht vorgegeben ist, sondern in dem Bild bestimmt wird. Die Auswahl der biometrischen Landmarks für das Aufteilen des Bildes kann erst im Laufe der Bestimmung des Bilddatensatzes vorgegeben werden, beispielsweise in Abhängigkeit von der Genauigkeit, mit der bestimmte der vorgegebenen biometrischen Landmarks in den Bildern bestimmt werden konnten. Alternativ kann die Auswahl der biometrischen Landmarks für das Bestimmen des Bilddatensatzes fest vorgegeben sein.

Vorzugsweise wird für das Bestimmen eines Bilddatensatzes für ein biometrisches Passbild über die Landmark-Dichte ein Bild mit einer Kopfausrichtung ausgewählt, die einer gewünschten Kopfausrichtung möglichst nahekommt, welche über einen Referenzwert definiert ist. Bei einer Kopfbewegung während einer Videoaufnahme eines Gesichts einer Person bewegen sich die Landmarks des Gesichts im Bildausschnitt. Gleichzeitig ändern sich aufgrund der durch die Videokamera vorgegebene Perspektive auch die Abstände zwischen Landmarks in dem aufgenommenen Bild des Gesichts. Eine Aufteilung eines Bilds in Sektoren anhand vorgegebener Landmarks führt in der Folge dazu, dass sich bei einer Kopfbewegung die Fläche der Sektoren in einem aus der Videoaufnahme bestimmten Bild (in der Bildebene) ändert. Zudem können Landmarks durch die Kameraperspektive bei einer Kopfbewegung in einen anderen Sektor wandern. Beispielsweise führt dies dann bei einer Aufteilung eines Bildes entlang einer durch die Stirnmitte und die Kinnspitze verlaufenden Begrenzungslinie dazu, dass bei einer Links-Rechts-Drehung des Kopfes die Nasenspitze zwischen dem linken und dem rechten Sektor wandert. Insgesamt ergibt sich, dass eine Kopfbewegung zu einer Änderung der Landmark-Dichte in Sektoren führt.

In weiteren Aspekten ist das Verfahren ferner gekennzeichnet durch ein Verändern der Beleuchtung mittels der Beleuchtungseinrichtung, um Reflexionen zu mindern oder zu beseitigen. So kann das Korrekturverfahren eine Anpassung der Beleuchtung umfassen. Es können einzelne Lichtquellen aktiviert oder deaktiviert werden. In weiteren Ausführungen kann die Leuchtintensität einzelner Lichtquellen erhöht oder verringert werden. Es kann eine Veränderung der Beleuchtungsintensität erfolgen, beispielsweise ein graduelles Erhöhen einer Beleuchtungsintensität des Gesichts des Nutzers mittels der Beleuchtungsvorrichtung bis zu einem vorbestimmten Wert, während das Symbol entlang des vorgegebenen Bewegungspfads über die Oberfläche der Anzeigeeinrichtung bewegt wird. Der vorbestimmte Wert kann beispielweise durch eine optimale Ausleuchtung des Gesichts für die Aufnahme des Bildes gegeben sein. Die optimale Ausleuchtung kann über Referenzdaten ermittelt werden.

Bei herkömmlichen Verfahren wird die Beleuchtung zur Ausleuchtung des Gesichts beispielsweise in Form eines Blitzes bei Aufnahme des entsprechenden Bildes angewandt. Die Erfinder haben nunmehr herausgefunden, dass ein Grund für das Einnehmen einer unnatürlich angespannten Haltung durch eine Ablenkung des Nutzers aufgrund einer sich verändernden Ausleuchtung verursacht wird.

Wenn der Nutzer sich auf die Bewegung des Symbols konzentriert, ist der Nutzer von seiner Umgebung abgelenkt. Infolgedessen merkt der Nutzer nicht unmittelbar, dass die Ausleuchtung des Gesichts verändert wird, und wird somit nicht davon abgelenkt. Damit verbleibt der Nutzer weiterhin in einer entspannten Haltung, sodass optimale Bilder trotz Veränderung der Ausleuchtungsintensität bei optimaler Ausleuchtung erreicht werden können.

In einem Aspekt ist das Verfahren dadurch gekennzeichnet, dass der vorgegebene Bewegungspfad eine gebogene, insbesondere eine kreisförmige, halbkreisförmige oder bogenförmige, Form auf der Oberfläche der Anzeigeeinrichtung aufweist. Ein Vorteil ist einer derartigen Ausführung des Bewegungspfades ist die damit bewirkbare Auf- und/oder Abbewegung des Kopfes der aufzunehmenden Person, mit der sich der Ein- und Ausfallwinkel von im Bereich des Kopfes reflektiertem Licht verändern lassen. Des Weiteren kann durch entsprechende Gestaltung des Bewegungspfades die zurückgelegte Wegstrecke auf der Oberfläche der Anzeigeeinrichtung verlängert werden. Damit kann bei gleichbleibender Geschwindigkeit des Symbols die Zeitspanne vergrößert werden, in welcher sich das Symbol über die Oberfläche der Anzeigeeinrichtung bewegt und das Zeitfenster für die Aufnahme eines oder mehrerer Bilder vergrößert.

Die Attraktion wird vorzugsweise radial um einen Austrittspunkt bewegt, an dem der optische Pfad der Bildaufnahmeeinrichtung aus der Oberfläche der Anzeigeeinrichtung in Richtung des Nutzers austritt. Der Teil des optischen Pfades, der aus der Oberfläche der Anzeigeeinrichtung in Richtung des Nutzers austritt, wird vorliegend auch als optische Achse bezeichnet. Wenn sich das Symbol radial um den Austrittspunkt der Oberfläche bewegt und der Nutzer dem Symbol folgt, bewegt sich die Pose des Nutzers radial zu dem optischen Pfad der Bildaufnahmeeinrichtung und der Sichtachse auf den Austrittspunkt. Dadurch werden bei einer Vielzahl von aufgenommenen Bildern vergleichbare Ergebnisse hinsichtlich der Pose des Nutzers erreicht. Der Austrittspunkt ist vorzugsweise nahe oder im Mittelpunkt der Anzeigeeinrichtung vorgesehen.

In bevorzugten Ausführungen des Verfahrens ist vorgesehen, dass der vorgegebene Bewegungspfad einen Radius mit einem Mittelpunkt der Oberfläche der Anzeigeeinrichtung einschließt. Mit anderen Worten bewegt sich das Symbol etwa symmetrisch zu einem Mittelpunkt der Oberfläche der Anzeigeeinrichtung. Somit kann Abbildungsbreite der Anzeigeeinrichtung bestmöglich genutzt werden. Die Anzeigeeinrichtung und die Bildaufnahmeeinrichtung können in besonders bevorzugten Aspekten so zueinander ausgerichtet sind, dass eine Sichtachse zur Oberfläche der Anzeigeeinrichtung, insbesondere zum Mittelpunkt der Oberfläche, und ein optischer Pfad der Bildaufnahmeeinrichtung an der Position des Nutzers zusammenfallen. Eine derartige Anordnung kann beispielsweise mittels eines optischen Systems realisiert werden, das wenigstens ein Prisma ein in Teilen durchlässiges Prisma umfasst.

Das optische System kann einen Strahlteiler bilden. Der aus dem optischen System heraustretende Teil des optischen Pfades der Bildaufnahmeeinrichtung und die Sichtachse auf die Oberfläche der Anzeigeeinrichtung können idealerweise nahe beieinander liegen oder zusammenfallen, insbesondere in einen mittleren Bereich oder auf dem Mittelpunkt der Anzeigeeinrichtung.

Gemäß diesem Aspekt wird der Blickwinkel bezüglich der von dem in Richtung des Nutzers austretenden optischen Pfades des optischen Systems gebildeten optischen Achse der Bildaufnahmevorrichtung durch den radialen Abstand des Bewegungspfads der Attraktion zu dem Austrittspunkt festgelegt, während der Nutzer dem sich bewegenden Symbol folgt. Wenn der vorgegebene Bewegungspfad einen entsprechenden radialen Abstand zu dem Austrittspunkt auf der Oberfläche der Anzeigeeinrichtung aufweist, wird der dem Bewegungspfad folgende Nutzer entsprechend den Kopf nach oben oder nach unten neigen, oder auch zur Seite drehen. Somit ändert sich auch der Winkel einer an dem Kopf der aufzunehmenden Person befindlichen reflektierenden Fläche.

Um eine optimale Pose des Nutzers in dem Bild zu erreichen, d.h. ein Bild, das z.B. ICAO-Kriterien für biometrische Passbilder genügt oder das innerhalb vorgegebener Toleranzen für biometrische Passbilder liegt, darf die Neigung des Kopfes des Nutzers nicht zu groß sein. Entsprechend wird der Abstand der Attraktion von dem Austrittspunkt vorzugsweise derart gewählt, dass die Neigung des Kopfes des Nutzers mit hoher Wahrscheinlichkeit innerhalb eines vorbestimmten Winkelbereichs bleibt.

Gemäß eines weiteren Aspekts ist das Verfahren dadurch gekennzeichnet, dass die Bildaufnahmeeinrichtung und die Anzeigeeinrichtung mit Hilfe einer teilweise reflektierenden optischen Vorrichtung, insbesondere wenigstens eines Prismas, derart zueinander ausgerichtet sind, dass eine optische Achse der Bildaufnahmeeinrichtung und eine Sichtachse auf die Oberfläche der Anzeigeeinrichtung, insbesondere eine durch den Mittelpunkt der Anzeigeeinrichtung, an einer für den Nutzer vorgegebenen Position insbesondere koaxial zueinander zusammenlaufen.

Wenn der Nutzer somit auf die Anzeigeeinrichtung, insbesondere deren Mittelpunkt blickt, ist die Blickrichtung des Nutzers auch in Richtung der Bildaufnahmevorrichtung, insbesondere entlang deren optischer Achse gerichtet.

Gemäß einem weiteren Aspekt ist das Verfahren dadurch gekennzeichnet, dass der vorgegebene Bewegungspfad sich von einer ersten seitlichen Begrenzung der Oberfläche der Anzeigeeinrichtung zu einer zweiten der ersten seitlichen Begrenzung entgegengesetzten seitlichen Begrenzung der Oberfläche erstreckt.

Damit wird die Wegstrecke des sich entlang des Bewegungspfads bewegenden Symbols vergrößert. Somit wird bei gleichbleibender Geschwindigkeit des Symbols das Zeitfenster vergrößert, in welchem eine Vielzahl von Bildern aufgenommen werden kann.

Gemäß einem weiteren Aspekt ist das Verfahren gekennzeichnet durch Ausgeben einer visuellen Aufforderung auf der Anzeigeeinrichtung oder einer akustischen Aufforderung an den Nutzer, sich auf das Symbol zu konzentrieren, bevor sich das Symbol entlang des vorgegebenen Bewegungspfads bewegt. Damit wird sichergestellt, dass der Nutzer sich auf das sich bewegende Symbol konzentriert, um optimale Bilder aufnehmen zu können.

Gemäß weiteren Ausführungen der Erfindung kann das Korrekturverfahren eine Bewegung der Anzeigeeinrichtung in Höhenrichtung umfassen. Durch eine Bewegung der Anzeigeeinrichtung in Höhenrichtung kann bewirkt werden, dass die Person ihren Kopf nach oben oder unten neigt, je nachdem, in welche Richtung die Reflexionsfläche geneigt werden sollte, um mit geringstmöglicher Bewegung des Kopfes den Bildsensor der Bildaufnahmeeinrichtung aus dem reflektierten Licht herauszubewegen. Dabei kann die Anzeigeeinrichtung insbesondere gemeinsam mit der Bildaufnahmeeinrichtung bewegt werden. Somit kann die Bildaufnahmeeinrichtung der Bewegung des Kopfes folgen, um weiterhin ICAO-konforme Bilder zu erzeugen.

In bevorzugten Ausführungen des Verfahrens dauert der Empfang einer Bildfolge, insbesondere eines Videostreams, während der Durchführung des Korrekturverfahrens an. Auf diese Weise kann das Korrekturverfahren während der Bewegungen der aufzunehmenden Person angepasst und optimiert werden.

Gemäß einer besonders bevorzugten Variante des erfindungsgemäßen Verfahrens werden die einzelnen Schritte in folgender Reihenfolge ausgeführt: Zunächst wird eine Einstellung der Höhe der Bildaufnahmeeinrichtung und/oder der Beleuchtungseinrichtung vorgenommen. Die Einstellung der Höhe der Bildaufnahmeeinrichtung erfolgt vorzugsweise auf Grundlage der Größe der aufzunehmenden Person, die anhand zumindest eines erstens empfangenen Bildes der Person bestimmt wird, sobald sich die Person in einem Aufnahmebereich der Bildaufnahmeeinrichtung befindet. Anschließend wird der Empfang einer Bildfolge und/oder eines Videostreams gestartet. Auf Grundlage der empfangenen Bilddaten wird nun eine Reflexion in einem oder mehreren Bildern der Bildfolge beziehungsweise des Videostreams bestimmt. Dies erfolgt vorzugsweise mittels eines trainierten Maschinenlernalgorithmus. Falls eine Reflexion bestimmt wird, d.h. falls eine Reflexion vorhanden ist, wird das Korrekturverfahren gestartet. Das Korrekturverfahren umfasst die Anzeige einer Attraktion auf der Anzeigeeinrichtung. Um nun die aufzunehmende Person zu einer Neigung des Kopfes in eine vorgesehene Richtung zu bewegen, wird die Attraktion auf der Anzeigeeinrichtung in einer Höhenrichtung nach oben oder nach unten bewegt. Folgt die aufzunehmende Person der Attraktion, kann eine Neigung des Kopfes und somit auch eine Neigung der Reflexionsfläche gegenüber der Bildaufnahmeeinrichtung erreicht werden. Vorzugsweise wird Bildaufnahmeeinrichtung in einer Höhenrichtung entgegengesetzt zur Attraktion, d.h. nach unten oder nach oben bewegt, vorzugsweise gleichzeitig. Dabei wird die Anzeigeeinrichtung vorzugsweise gemeinsam mit der Bildaufnahmeeinrichtung bewegt. Indem die Person der Attraktion folgt, die sich entgegengesetzt der mit der Bildaufnahmeeinrichtung bewegten Anzeigeeinrichtung bewegt, verändert die Person idealerweise kaum die Position ihres Kopfes bzw. sie folgt nicht der Bewegung der Bildaufnahmeeinrichtung. während der Neigungswinkel des Kopfes der Person gegenüber dem Bildsensor der Bildaufnahmeeinrichtung verändert wird. Sobald ein empfangenes Bild dem wenigstens einen oder mehreren Reflexionskriterien genügt, wird mit der Erstellung eines digitalen biometrischen Bildes fortgefahren, insbesondere wird ein Datensatz für ein biometrisches Bild bereitgestellt. Vor der Erstellung eines Datensatzes können die Bilddaten nach weiteren Eignungskriterien geprüft werden.

Vorzugsweise erfolgt die Einstellung der Höhe der Bildaufnahmeeinrichtung sowie der Beleuchtungseinrichtung zunächst für das Gros der Menschen und üblicher Brillen. Dafür können in einem Speicher der Bilderzeugungsvorrichtung gespeicherte Referenzwerte abgerufen werden. Beispielsweise kann auf Grundlage der Größe des Nutzers eine Größe der Brille approximiert werden.

Falls eine Reflexion bestimmt wurde, wird vorzugsweise der Nutzer zunächst aufgefordert, der Attraktion zu folgen und die Attraktion auf der Anzeigeeinrichtung wird nach unten bewegt, so dass der Nutzer leicht nach unten sieht. Gleichzeitig oder unmittelbar im Anschluss wird die Bildaufnahmeeinrichtung nach oben bewegt. Dabei wird kontinuierlich eine Bildfolge bzw. ein Videostream aufgenommen und fortlaufend bestimmt, ob eine Reflexion vorhanden ist. Sobald keine Reflexion mehr bestimmt wird, werden die nachfolgenden Bilder weiter auf die Erfüllung von Eignungskriterien geprüft und/oder einer ein Bilddatensatz für ein biometrisches Bild bereitgestellt.

Eine erfindungsgemäße Bilderzeugungsvorrichtung zum Erfassen von biometrischen Merkmalen einer Person weist eine Bildaufnahmeeinrichtung zum Aufnehmen von Bilddaten der Person auf, sowie Mittel, die ausgelegt und angepasst sind, die oben beschriebenen Verfahrensschritte auszuführen.

Die Bilderzeugungsvorrichtung ist vorzugsweise mit einer Datenverarbeitungseinrichtung versehen, die ausgelegt und konfiguriert ist, die Bildaufnahmeeinrichtung zur Ausführung der oben beschriebenen Verfahrensschritte anzusteuern. Die Datenverarbeitungseinrichtung weist insbesondere einen Prozessor sowie einen Speicher auf.

Gemäß bevorzugten Ausführungsformen der Bilderzeugungsvorrichtung weist diese eine Anzeigeeinrichtung auf, die ausgelegt ist, ein grafisches Symbol auf einer für den Nutzer sichtbaren Oberfläche der Anzeigeeinrichtung anzuzeigen. Die Anzeigeeinrichtung ist vorzugsweise ein Bildschirm, insbesondere ein LED-Bildschirm. Dabei weist der Bildschirm eine Größe auf, die eine Darstellung einer für eine Korrekturbewegung der Person ausreichende Wegstrecke ermöglicht. Somit kann während eines Korrekturverfahrens eine Attraktion angezeigt werden, die durch ihre Bewegung über eine vordefinierte Bahn die aufzunehmende Person zu einer die Reflexion mindernden oder beseitigenden Bewegung des Kopfes veranlasst.

Die Bilderzeugungsvorrichtung vorzugsweise als ein Kiosk-Terminal ausgestaltet. Dabei sind die Beleuchtungseinrichtung, die Bildaufnahmeeinrichtung, die Anzeigeeinrichtung, eine Bedieneinrichtung und/oder die Datenverarbeitungseinrichtung in das Kiosk-Terminal integriert. Dies hat den Vorteil eines vereinfachten Transports und Aufbaus der Bilderzeugungsvorrichtung. Für einen kompakten Aufbau kann die Beleuchtungseinrichtung mit der Bildaufnahmeeinrichtung und/oder der Anzeigeeinrichtung starr verbunden sein.

In weiteren Ausgestaltungen der Bilderzeugungsvorrichtung können die Bildaufnahmeeinrichtung und die Anzeigeeinrichtung mittels einer teilweise reflektierenden optischen Vorrichtung, insbesondere mittels wenigstens eines Prismas, derart zueinander ausgerichtet sein, dass eine optische Achse der Bildaufnahmeeinrichtung und eine Sichtachse zu der Oberfläche der Anzeigeeinrichtung an einer für den Nutzer vorgegebenen Position zusammenfallen und bevorzugt zumindest in Teilen koaxial zueinander verlaufen. Auf diese Weise sieht der Nutzer beim Betrachten der Anzeigeeinrichtung sowie beim Verfolgen einer auf der Anzeigeeinrichtung gezeigten Attraktion auch in Richtung der Bildaufnahmeeinrichtung.

Die Anzeigeeinrichtung und die Bildaufnahmeeinrichtung können in besonders bevorzugten Aspekten so zueinander ausgerichtet sein, dass eine Sichtachse zu einem Mittelpunkt der Oberfläche der Anzeigeeinrichtung und ein optischer Pfad zu der Bildaufnahmeeinrichtung am Ort des Gesichts des Nutzers zusammenfallen. Am Ort des Nutzers und/oder ab dem verlaufen die Sichtachse und der optische Bewegungspfad vorzugsweise koaxial oder etwa koaxial. Eine derartige Anordnung kann beispielsweise über ein teilweise durchlässiges Prisma realisiert werden. Der Nutzer kann somit durch das Prisma die Oberfläche der Anzeigeeinrichtung erkennen, wobei ein Teil des von der Gesichtsoberfläche zurückgeworfenen Lichts durch das Prisma in Richtung der Bildaufnahmeeinrichtung reflektiert wird.

In weiteren Ausführungen ist die Bilderzeugungsvorrichtung mit einem Computerprogrammprodukt versehen, das Befehle umfasst, die bei der Ausführung des Verfahrens durch das Datenverarbeitungssystem bewirken, dass die Bilderzeugungsvorrichtung das erfindungsgemäße Verfahren ausführt. Das Computerprogrammprodukt ist vorzugsweise über einen Fernzugriff mittels eines Netzwerks installierbar ausgestaltet.

Weitere Vorteile und Einzelheiten der Erfindung werden beispielhaft anhand der in den schematischen Figuren dargestellten Ausführungsbeispielen näher erläutert. Hierbei zeigt:
- Fig. 1: eine schematische Darstellung einer Anordnung zur Erstellung eines biometrischen Bildes einer Person;
- Fig. 2: eine schematische Darstellung einer erfindungsgemäßen Bilderzeugungsvorrichtung zur Erstellung eines biometrischen Bildes einer Person;
- Fig. 3: eine weitere schematische Darstellung der Bilderzeugungsvorrichtung der Fig. 2 in einer angepassten Position;
- Fig. 4: eine schematische Darstellung einer Anzeigeeinrichtung;
- Fig. 5: ein Flussdiagramm, welches die wesentlichen Schritte des erfindungsgemäßen Verfahrens zeigt.

Im Folgenden werden beispielhafte Ausführungsformen der Erfindung mit Bezugnahme auf die Figuren beschrieben, wobei gleiche Bezugszeichen sich auf gleiche Elemente beziehen. Es versteht sich, dass auch andere Ausführungsformen erstellt und Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele auch in anderer Weise miteinander kombiniert werden können, sofern nicht etwas anderes angegeben ist.

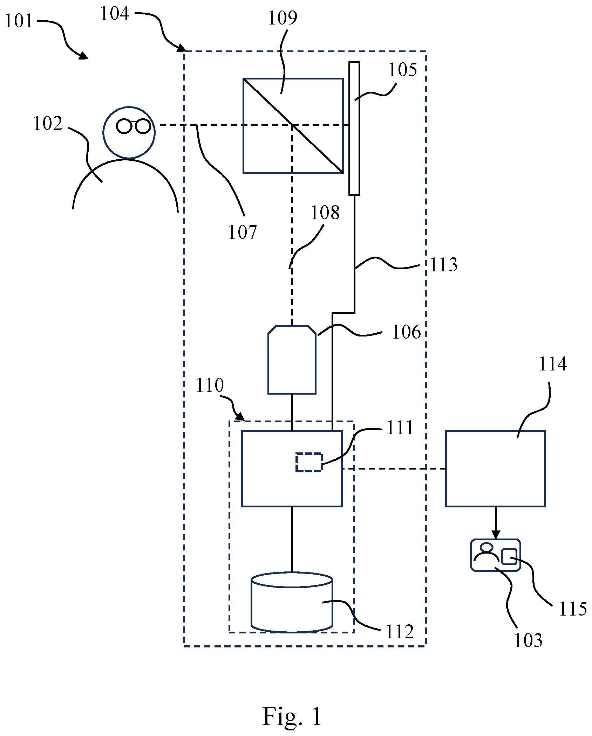

Fig. 1 zeigt eine schematische Darstellung einer Anordnung 101 zum Erzeugen von Bilddaten für ein digitales biometrisches Bild eines Nutzers 102 für die Personalisierung eines Sicherheitsdokumentes 103. Eine Bilderzeugungsvorrichtung 104 dient der Erzeugung eines biometrischen Passbildes des Nutzers 102.

Die Bilderzeugungsvorrichtung 104 verfügt über eine Anzeigeeinrichtung 105 mit einer zweidimensionalen Oberfläche. Diese ist in Figur 1 in Seitenansicht gezeigt. In Draufsicht, d.h. aus Perspektive des Nutzers 102, kann die Oberfläche der Anzeigeeinrichtung 105 kann beispielsweise in einer Frontalansicht rechteckig ausgebildet sein.

Darüber hinaus verfügt das System über eine Bildaufnahmeeinrichtung 106, die eine Kamera mit einem Bildsensor aufweisen kann und die in diesem Ausführungsbeispiel als Videobildaufnahmeeinrichtung zur Aufnahme eines Videostreams ausgestaltet ist. Die Bildaufnahmeeinrichtung 106 kann zum Beispiel von einer Videobildkamera gebildet sein. Mittels der Bildaufnahmeeinrichtung 106 werden Portrait- und/oder Gesichtsbilder einer Person 102 im Rahmen einer Videobildaufnahme aufgenommen.

Die Bildaufnahmeeinrichtung 105 und die Anzeigeeinrichtung 105 sind so zueinander ausgerichtet, dass der Nutzer 102 die Oberfläche der Anzeigeeinrichtung entlang einer Sichtachse 107 betrachten kann, während mit der Bildaufnahmeeinrichtung 106 ein oder mehrere Gesichtsbilder von dem Gesicht des Nutzers aufgenommen werden.

Um zu realisieren, dass ein Nutzer die Anzeigeeinrichtung 105 betrachten kann, während er mittels der Bildaufnahmeeinrichtung 106 aufgenommen wird, können die Bildaufnahmeeinrichtung 106 und die Anzeigeeinrichtung 105 so zueinander ausgerichtet sein, dass ein optischer Pfad 108 der Bildaufnahmeeinrichtung 106 und eine auf die Oberfläche der Anzeigeeinrichtung 105 gerichtete Sichtachse 107 zumindest in Teilen zusammenlaufen.

Es kann eine teilweise reflektierende optische Vorrichtung 109, wie etwa ein Prisma 109 vorgesehen sein, welche von dem Gesicht des Nutzers 102 zurückgeworfenes Licht zumindest in Teilen entlang des optischen Bewegungspfades 108 in die Bildaufnahmeeinrichtung 106 reflektiert, wobei die reflektierende optische Vorrichtung 109 teilweise durchlässig ist für von der Oberfläche der Anzeigeeinrichtung 105 ausgehendes Licht. Somit kann der Nutzer 102 entlang einer Sichtachse 107 die Oberfläche der Anzeigeeinrichtung 105 erkennen, während von dem Gesicht des Nutzers 102 zurückgeworfenes Licht entlang eines optischen Bewegungspfades 8 zu der Bildaufnahmeeinrichtung 106 gelangt. Damit kann der Nutzer die Oberfläche der Anzeigeeinrichtung betrachten während durch die Bildaufnahmeeinrichtung 106 Gesichtsbilder von dem Gesicht des Nutzers aufgenommen werden.

Die gezeigte Anordnung der teilweise reflektierenden optischen Vorrichtung 109, der Anzeigeeinrichtung 105 und der Bildaufnahmeeinrichtung 106 kann je nach Geometrie der teilweise reflektierenden optischen Vorrichtung 109 unterschiedlich ausgestaltet sein kann, z.B. bei Verwendung eines Prismas mit angepasster Geometrie. Darüber hinaus können die Positionen der Anzeigeeinrichtung 105 und der Bildaufnahmeeinrichtung 106 vertauscht sein.

Die Bildaufnahmeeinrichtung 106 und die Anzeigeeinrichtung 105 werden durch eine mit der Bildaufnahmeeinrichtung 106 und der Anzeigeeinrichtung 105 signalübertragend verbundene Datenverarbeitungseinrichtung 110 angesteuert und ausgelesen. Die Datenverarbeitungseinrichtung 110 weist einen Prozessor 111 sowie einen Speicher 112 auf, die signalübertragend miteinander verbunden sind. Mit Hilfe einer Datenverarbeitungseinrichtung 110 werden die in dem Bilddatenstrom mit einer Bildwiederholfrequenz enthaltenen Bilder in dem Speicher 112 als digitale Bilddaten abgelegt. In dem Speicher 112 werden die durch die Bildaufnahmeeinrichtung 106 aufgenommenen Gesichtsbilder für die Bestimmung von Reflexionen oder für die Erzeugung eines Bilddatensatzes für ein biometrisches Gesichtsbild zwischengespeichert. Der erzeugte Bilddatensatz kann vor seiner Verwendung ebenso in dem Speicher 112 gespeichert werden. Darüber hinaus können in dem Speicher 112 verschiedene, als Attraktion dienende Symbole und/oder Daten zur Durchführung des erfindungsgemäßen Verfahrens gespeichert sein.

Der Prozessor 111, und somit auch die Datenverarbeitungseinrichtung 110, ist ausgelegt und eingerichtet, die Bildaufnahmeeinrichtung 106 und die Anzeigeeinrichtung 105 derart anzusteuern, dass zunächst wenigstens ein Bild und/oder eine Bildfolge, insbesondere ein Videostream, des Nutzers 102 aufgenommen wird. Die Bilddaten gelangen durch die Datenleitung 113 zur Datenverarbeitungseinrichtung 110 und werden zunächst im Speicher 112 zwischengespeichert. Nun wird bestimmt, ob eine Reflexion vorhanden ist. Falls ja, wird mittels des Prozessors 111 ein Korrekturverfahren gestartet. Das Korrekturverfahren umfasst bevorzugt eine Höhenverstellung der teilweise reflektierenden optischen Vorrichtung 109 gemeinsam mit der Bildaufnahmeeinrichtung 106 sowie der Anzeigeeinrichtung 105. Die teilweise reflektierende optische Vorrichtung 109, die Bildaufnahmeeinrichtung 106 sowie die Anzeigeeinrichtung 105 sind dazu vorzugsweise starr miteinander verbunden. Des Weiteren wird zeitgleich auf der Oberfläche der Anzeigeeinrichtung 105 ein als Attraktion dienendes grafisches Symbol, wie etwa eine Sonne, angezeigt, wobei sich das grafische Symbol entlang eines vorgegebenen Bewegungspfads über die Oberfläche der Anzeigeeinrichtung 105 bewegt, während durch die Bildaufnahmeeinrichtung 106 ein Gesichtsbild oder mehrere Gesichtsbilder an aufeinanderfolgenden Zeitpunkten, insbesondere in Form eines Videostreams aufgenommen werden. Der Prozessor 111 ist vorzugsweise eingerichtet, eine Reflexion in einem oder mehreren Gesichtsbildern zu bestimmen und/oder das eine oder die mehreren Gesichtsbilder hinsichtlich der Erfüllung von Reflexionskriterien zu prüfen.

Auf Basis eines ausgewählten Gesichtsbildes, welches das mindestens eine vorgegebene Reflexionskriterium erfüllt, wird ein Bilddatensatz zur Personalisierung eines Sicherheitsdokumentes erzeugt. Der Bilddatensatz kann beispielweise vorübergehend in dem Speicher 112 abgelegt und anschließend an eine Personalisierungseinrichtung 114 gesendet werden.

Während das Bestimmen der Bilddaten des digitalen biometrischen Bildes ausgeführt wird, kann das Aufnehmen der Bilder mittels Videoaufnahme fortgeführt werden, so dass fortdauernd neue Bilddaten bereitgestellt werden, auf die beim Bestimmen der Bilddaten zurückgegriffen werden kann. Das Aufnehmen der Bilder kann zumindest so lange fortgeführt werden, bis zumindest für eines der Bilder aus der Videobildaufnahme bestimmt wird, das neben Reflexionskriterien auch andere erforderliche Eignungskriterien bezüglich der Eignung für ein digitales biometrisches Bild erfüllt.

Wird beim Prüfen der Bilddaten hinsichtlich der Reflexionskriterien und/oder anderer Eignungskriterien wenigstens eine Nichterfüllung festgestellt, können hierauf in der Datenverarbeitungseinrichtung 110 Steuerdaten erzeugt werden, um das weitere Aufnehmen von Bildern zur Erfüllung des Eignungskriteriums zu beeinflussen. Beispielsweise kann der Nutzer 102 aufgefordert werden, seine Position zu ändern. In einer Ausgestaltung kann dazu vorgesehen sein, dass die Steuerdaten eingerichtet sind, eine Ausgabe über eine Ausgabeeinrichtung 105 an die Person 102 zu steuern. Die Ausgabe kann über visuelle und/oder akustische Hinweise erfolgen.

Die ausgewählten Auswahlbilddaten können für die Personalisierung eines Sicherheitsdokumentes 103 an eine Personalisierungseinrichtung 114 übertragen werden, welche eingerichtet ist, das Sicherheitsdokument 103 zu personalisieren. Die Personalisierungseinrichtung 114 kann für einen Datenaustausch über eine Datenleitung 116, insbesondere ein Netzwerk mit der Datenverarbeitungseinrichtung 110 verbunden sein. Die Personalisierungseinrichtung 114 kann eine zusätzliche Datenverarbeitungseinrichtung aufweisen, die eingerichtet ist, von der Bilderzeugungsvorrichtung 104 empfangene Bilder anhand von Attributen einem bestimmten Sicherheitsdokument 103 zuzuordnen.

Zur Personalisierung von Wert- und/oder Sicherheitsdokumenten kann die Personalisierungseinrichtung 114 mit einer Druckeinrichtung ausgeführt sein, mittels der das biometrische Bild auf dem Sicherheitsdokument 103 aufgedruckt wird. Alternativ oder ergänzend kann vorgesehen sein, die Bilddaten in einer Speichereinrichtung 115 des Sicherheitsdokuments 103 abzulegen, die beispielsweise als Speicherchip ausgestaltet sein kann.

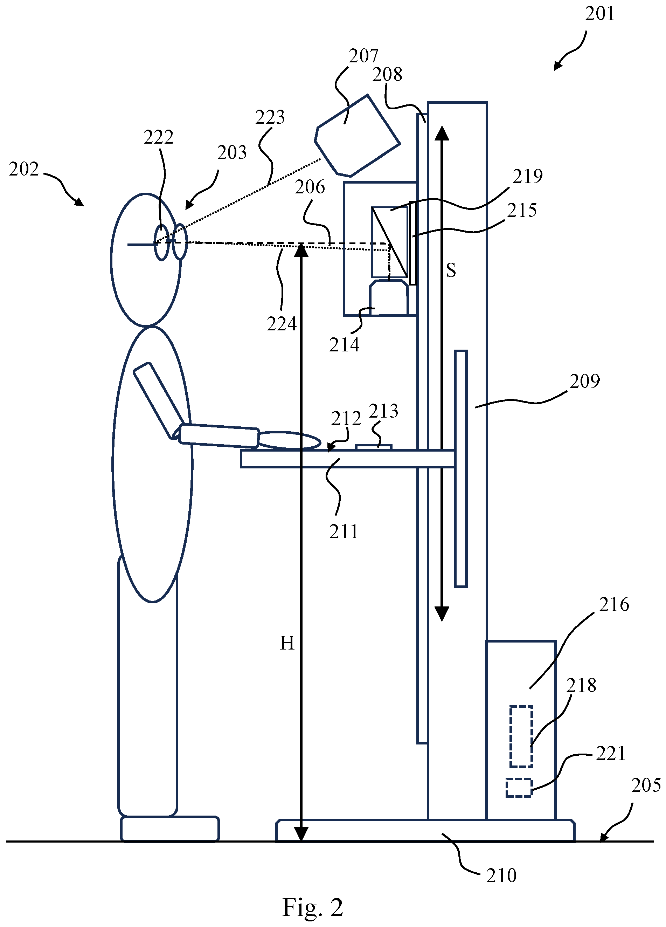

Fig. 2 zeigt eine schematische Darstellung einer Bilderzeugungsvorrichtung 201 zum Erfassen von biometrischen Merkmalen einer Person 202, die sich im gezeigten Beispiel vor der Bilderzeugungsvorrichtung 201 in stehender Position befindet. In der gezeigten Ausgestaltung ist die Bilderzeugungsvorrichtung 201 als ein Kiosk-Terminal ausgestaltet, welches auf einer Bezugsebene 205 ortsfest oder mobil angeordnet sein kann.

Die Bilderzeugungsvorrichtung weist eine Bildaufnahmeeinrichtung 214 auf, die zur Aufnahme biometrischer Porträts, insbesondere Passbilder ausgestaltet ist. Zum Aufnehmen von Porträts wird wahlweise eine Beleuchtungseinrichtung 207 genutzt, um die Person 202 auszuleuchten, insbesondere im Bereich des Gesichts 203.

Das von dem Gesicht 203 reflektierte Licht gelangt durch die teilweise reflektierende optische Vorrichtung zur Bildaufnahmeeinrichtung 214, die eingerichtet ist, ein digitales biometrisches Porträt der Person 202 aufzunehmen. Bei geeignetem Abstand und geeigneter Position der Person 202 ist somit ein biometrisches Porträt der Person 202 aufnehmbar.

Der optische Pfad der Bildaufnahmeeinrichtung 214 bildet ausgehend von der teilweise reflektierenden optischen Vorrichtung 219, die einen Strahlteiler bildet, eine Aufnahmeachse 206, über die das Bild der Person 202 in die Bildaufnahmeeinrichtung 214 gelangt. Die Aufnahmeachse 206 ist in einer Höhe H über der Bezugsebene 205, auf der im gezeigten Beispiel die Person 202 sowie die Bilderzeugungsvorrichtung 201 stehen, so angeordnet, dass eine horizontale Sicht- oder Aufnahmeachse 206 ausgebildet ist, entlang welcher die Bildaufnahmeeinrichtung 214 ein digitales biometrisches Porträt derart aufnehmen kann, dass aus den digitalen Daten für das Porträt biometrische Gesichtsmerkmale bestimmt werden können.

Bei dem dargestellten Ausführungsbeispiel ist die Beleuchtungseinrichtung 207 an der Bildaufnahmeeinrichtung 214 angeordnet, so dass die Beleuchtungseinrichtung 207 zusammen mit der Bildaufnahmeeinrichtung 214 höhenverstellbar an der Bilderzeugungsvorrichtung 201 angeordnet ist. Alternativ kann vorgesehen sein, dass die Beleuchtungseinrichtung 207 unabhängig von der Bildaufnahmeeinrichtung 214 verlagerbar ist, um ergänzende Korrekturmöglichkeiten bei Auftreten von Reflexionen zu gewinnen. Auch eine ortsfeste Montage der Beleuchtungseinrichtung 207 an der Bilderzeugungsvorrichtung 201 kann vorgesehen sein.

Zum Einstellen der Höhe der Bildaufnahmeeinrichtung 214 bzw. der Aufnahmeachse 206 und der starr mit diesen verbundenen Anzeigeeinrichtung 215 gegenüber der Bezugsebene 205 weist die Bilderzeugungsvorrichtung 201 eine Stelleinrichtung 208 auf, die bei dem gezeigten Beispiel an einem Träger 209 gebildet ist. Am unteren Ende des Trägers 209 ist dieser für einen stabilen Stand der Bilderzeugungsvorrichtung 201 mit einem Vorrichtungsfuß 210 verbunden.

Mittels der Stelleinrichtung 208 ist weiterhin eine Bedieneinrichtung 211 höhenverstellbar hinsichtlich der Bezugsebene 205 angeordnet. Die Höheneinstellung der Bedieneinrichtung erfolgt unabhängig von der Höheneinststellung der Bildaufnahmeeinrichtung 214. Die Bedieneinrichtung 211 ist beispielhaft ebenfalls an dem Träger 209 höhenverstellbar aufgenommen und stellt eine horizontale Auflagefläche 212 bereit, auf der eine Fingerabdruck- oder Fingerabdrucksensoreinrichtung 13 angeordnet ist, mit der für die Person 202 ein digitaler Fingerabdruck erfasst werden kann.

Mittels der Stelleinrichtung 208 ist es möglich, die Bildaufnahmeeinrichtung 214 sowie die Fingerabdruckeinrichtung 213 auf der Bedieneinrichtung 211 unabhängig und getrennt voneinander hinsichtlich der Höhe über der Bezugsebene 205 einzustellen, derart, dass das Aufnehmen des digitalen biometrischen Porträts wie auch das Erfassen des digitalen Fingerabdrucks mittels der Fingerabdruckeinrichtung 213 korrekt und für die Person 202 bequem erfolgen können.

Zur Steuerung einzelner Betriebsfunktionen der Bilderzeugungsvorrichtung 201 sowie zur Verarbeitung aufgenommener Bilder ist eine Datenverarbeitungseinrichtung 216 vorgesehen. Beispielsweise kann mittels der Datenverarbeitungseinrichtung 216 die Höhenverstellung der Bildaufnahmeeinrichtung 214 und der Bedieneinrichtung 211 mit Fingerabdruckeinrichtung 213 gesteuert werden. Die Datenverarbeitungseinrichtung 216 weist dazu einen hier nicht dargestellten Prozessor 221 sowie eine Speichereinrichtung 218 auf.

Mit der Datenverarbeitungseinrichtung 216 können weitere Funktionen gesteuert werden, beispielsweise das Erfassen des digitalen biometrischen Portraits mittels der Bildaufnahmeeinrichtung 214, das Betätigen der Beleuchtungseinrichtung 207 und / oder das Erfassen des digitalen Fingerabdrucks mit der Fingerabdruckeinrichtung 13.

Die Speichereinrichtung 218 der Datenverarbeitungseinrichtung 216 ist eingerichtet, Daten zumindest vorübergehend elektronisch zu speichern. Hiervon umfasst sein können zum Beispiel empfangene Bilddaten der Bildaufnahmeeinrichtung 214, Steuerungsdaten zum Steuern der Bilderzeugungsvorrichtung 201 und/oder der Bedieneinrichtung 211 und/oder der Fingerabdruckeinrichtung 213 beim Erfassen der biometrischen Identifizierungsmerkmale.

Die Person 202 hat ihr Gesicht 203 der Bilderzeugungsvorrichtung 201 zugewandt, und zwar der Anzeigeeinrichtung 215. Die Person trägt eine Brille 222, die wie das Gesicht der Bilderzeugungsvorrichtung 201 zugewandt ist. Ein hier exemplarisch dargestellter, von der Beleuchtungseinrichtung 207 erzeugter Lichtstrahl 223 trifft auf die Brille 222 und wird von dieser reflektiert. Dadurch entsteht eine Reflexion 224, die durch die teilweise reflektierende optische Vorrichtung auf den Sensor der Bildaufnahmeeinrichtung 214 trifft. In der Datenverarbeitungseinrichtung 216 wird die Reflexion 224 mittels eines trainierten Maschinenlernalgorithmus als solche erkannt. Aufgrund der Beeinträchtigung wird nun mittels der Datenverarbeitungseinrichtung 216 ein Korrekturverfahren zur Minderung oder Beseitigung der Reflexion gestartet. Beispielsweise wird der Nutzer zunächst aufgefordert, einer auf der Anzeigeeinrichtung 215 gezeigten Attraktion zu folgen. Zeitgleich wird die Bildaufnahmeeinrichtung 214 gemeinsam mit der mit ihr starr verbundenen Anzeigeeinrichtung 215 sowie der ebenso starr mit ihr verbundenen Beleuchtungseinrichtung 207 nach oben bewegt.

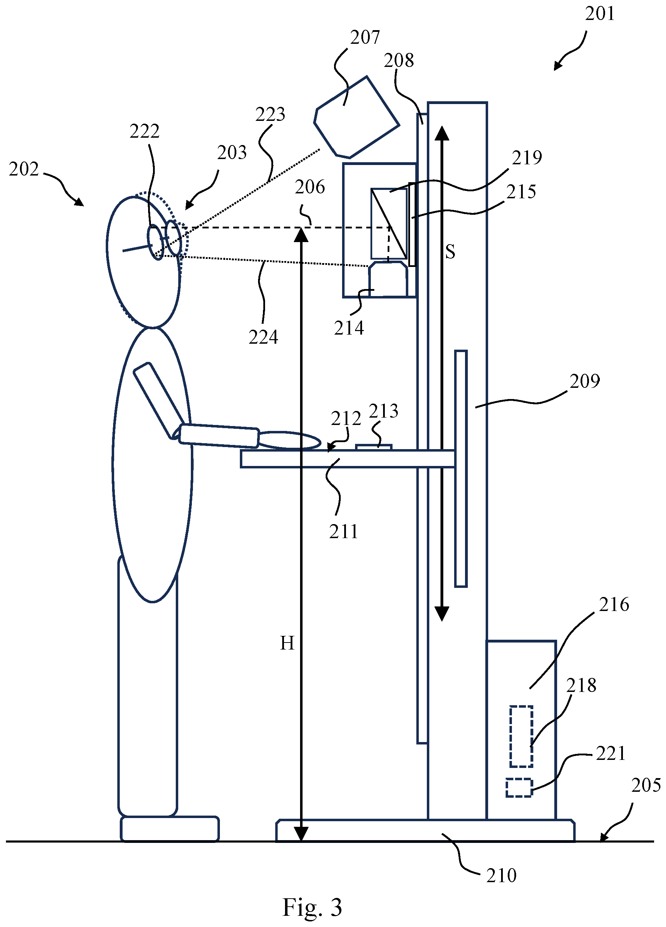

Figur 3 zeigt die Bilderzeugungsvorrichtung der Figur 2 in einer Position nach Ausführung eines Korrekturverfahrens zur Minderung und/oder Beseitigung von Reflexionen. Durch das Verfolgen der Attraktion auf dem Display der Anzeigeeinrichtung 215 hat der Nutzer 202 den Kopf leicht angehoben. Somit hat sich der Neigungswinkel der die Reflexion bildenden Fläche auf der Brille 222 geändert. Zusätzlich wurde die Höhe der Bildaufnahmeeinrichtung 214, der mit ihr starr verbundenen Anzeigeeinrichtung 215 sowie der ebenso starr mit ihr verbundenen Beleuchtungseinrichtung 207 verändert, indem diese geringfügig nach oben verlagert wurden.

Aufgrund der veränderten Positionen der reflektierenden Brille 222, der von der Beleuchtungseinrichtung 207 erzeugten Lichtquelle und der Bildaufnahmeeinrichtung 214 triff die Reflexion 224 des Lichtstrahls 223 nun nicht mehr in den Bildsensor der Bildaufnahmeeinrichtung 214. Je nach Verlauf der Reflexionsflächen können bereits geringste Lageänderungen des Kopfes der Person 202 ausreichen, eine störende Reflexion in dem empfangenen Bild zu beseitigen.

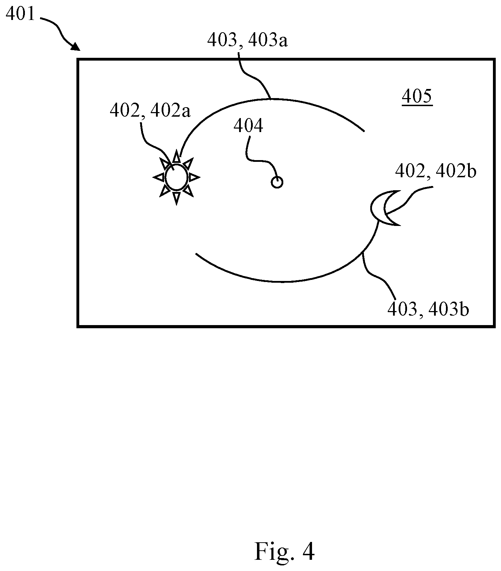

Figur 4 zeigt beispielhaft eine Draufsicht auf die Oberfläche einer Anzeigeeinrichtung 401. Die Anzeigeeinrichtung 401 kann beispielsweise von einem LED-Display gebildet sein. Die Anzeigeeinrichtung 401 umfasst eine Oberfläche 405, auf der Informationen angezeigt werden können. Die Oberfläche 405 kann beispielsweise eine rechteckige Form aufweisen.

Auf der Oberfläche 405 der Anzeigeeinrichtung 401 wird eine Attraktion 402 als Symbol wiedergegeben, wie etwa eine Sonne 402a oder ein Mond 402b. Die Attraktion 402 bewegt sich entlang eines entsprechend dem gewählten Korrekturverfahren vorbestimmten Bewegungspfads 403, z.B. entlang eines nach oben gewölbten Bewegungspfades 403a oder eines nach unten gewölbten Bewegungspfads 403b, über die Oberfläche 405 der Anzeigeeinrichtung 401. Die Geometrie des Bewegungspfads orientiert sich dabei an einem Punkt 404, an dem der optische Pfad der Bildaufnahmeeinrichtung die Anzeigeeinrichtung 401 durchdringt. Dieser kann dem Mittelpunkt der Anzeigevorrichtung 401 entsprechen. Der vorgegebene Bewegungspfad 403 kann eine im Wesentlichen gebogene, insbesondere etwa kreisförmige oder halbkreisförmige Form aufweisen, die einen Radius mit einem Punkt 404 der Oberfläche der Anzeigeeinrichtung einschließt.

Soll der Nutzer den Kopf beispielsweise nach oben neigen, folgt die Attraktion in Form des grafischen Symbols einer Sonne 402a dem nach oben gewölbten Bewegungspfad 403a, soll der Nutzer den Kopf beispielsweise nach unten neigen, folgt die Attraktion dem grafischen Symbol Mond 402b dem nach unten gewölbten Bewegungspfad 403b. Das die Attraktion darstellende Symbol kann natürlich jede beliebige Form aufweisen, solange eine deutliche, kontrastreiche Darstellung möglich ist. Dabei wird insbesondere immer nur ein Symbol auf der Anzeigeeinrichtung angezeigt.

Während sich das Symbol 402 entlang des vorgegebenen Bewegungspfads 403 über die Oberfläche der Anzeigeeinrichtung 401 bewegt, können mittels der Bilderzeugungsvorrichtung Gesichtsbilder von dem Gesicht des Nutzers aufgenommen werden.

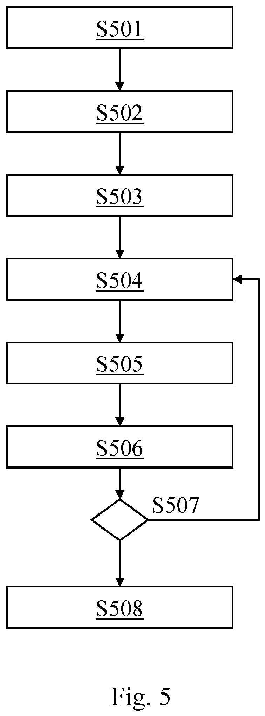

Figur 5 ist eine schematische Darstellung einer möglichen Ausführung des erfindungsgemäßen Verfahrens zum automatisierten Erstellen eines biometrischen Bildes von dem Gesicht einer Person.

Zunächst wird eine Bilderzeugungsvorrichtung zum Erfassen von biometrischen Merkmalen einer Person bereitgestellt, mit einer Bildaufnahmeeinrichtung zum Aufnehmen von Bilddaten der Person, S501. Mittels der Bildaufnahmeeinrichtung werden Bilddaten wenigstens eines Bildes und/oder einer Bildfolge der Person empfangen, S502. Die Bilddaten können eine Bildfolge bzw. einen Videostream definieren. Es folgt anhand der Bilddaten die Bestimmung einer in dem Bild abgebildeten Reflexion und/oder eine Prüfung der Erfüllung von Reflexionskriterien, S503. Wurde eine Reflexion bestimmt, werden Steuerdaten zur Ausführung eines Korrekturverfahrens zur Minderung oder Beseitigung der Reflexion ausgegeben, S504. Die Steuerdaten können Anweisungen an den Nutzer über die Anzeigeeinrichtung umfassen und/oder Einstellungen der Position, insbesondere der Höhe der Bildaufnahmeeinrichtung oder der Beleuchtungseinrichtung auslösen.

Entweder kontinuierlich oder im Anschluss an das Korrekturverfahren werden Bilddaten wenigstens eines zweiten Bildes oder einer Bildfolge der Person empfangen, S505. Anschließend oder bereits während des Empfangs weiterer Bilder wird erneut das Vorhandensein einer Reflexion und die Erfüllung von Reflexionskriterien geprüft, S506.

Das zweite Bild bzw. die weiteren Bilder stellen idealerweise Bilddaten dar, in welchen die Reflexion des ersten Bildes reduziert bzw. beseitigt ist. ungeeignet ist, wird das Verfahren über eine Schleife S507 mit der erneuten Ausgabe von Steuerdaten, S504, zur Ausführung eines Korrekturverfahrens zur Minderung oder Beseitigung der Reflexion fortgesetzt.

Ist keine Reflexion mehr vorhanden bzw. erfüllen die Bilddaten die Reflexionskriterien, erfolgt - sofern nicht andere Eignungskriterien unerfüllt sind - die Ausgabe eines Bilddatensatzes zur Erstellung eines biometrischen Bildes, S508.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 101: Anordnung zum Erzeugen von Bilddaten
- 102: Person, Nutzer
- 103: Sicherheitsdokument
- 104: Bilderzeugungsvorrichtung
- 105: Anzeigeeinrichtung
- 106: Bildaufnahmeeinrichtung
- 107: Sichtachse
- 108: Optischer Pfad der Bildaufnahmeeinrichtung
- 109: teilweise reflektierende optische Vorrichtung
- 110: Datenverarbeitungseinrichtung
- 111: Prozessor
- 112: Speicher
- 113: Datenleitung
- 114: Personalisierungseinrichtung
- 115: Speichereinrichtung
- 116: Datenleitung

- 201: Bilderzeugungsvorrichtung
- 202: Person, Nutzer
- 203: Gesicht
- 205: Bezugsebene
- 206: Aufnahmeachse
- 207: Beleuchtungseinrichtung
- 208: Stelleinrichtung
- 209: Träger
- 210: Vorrichtungsfuß
- 211: Bedieneinrichtung
- 212: Auflagefläche
- 213: Fingerabdruckeinrichtung
- 214: Bildaufnahmeeinrichtung
- 215: Anzeigeeinrichtung
- 216: Datenverarbeitungseinrichtung
- 218: Speichereinrichtung
- 219: teilweise reflektierende optische Vorrichtung
- 221: Prozessor
- 222: Brille
- 223: Lichtstrahl
- 224: Reflexion

- 401: Anzeigeeinrichtung
- 402: Attraktion
- 402a: Grafisches Symbol Sonne
- 402b: Grafisches Symbol Mond
- 403: Bewegungspfad
- 403a: nach oben gewölbter Bewegungspfad
- 403b: nach unten gewölbter Bewegungspfad
- 404: Oberfläche
- 405: Punkt, an dem der optische Pfad der Bildaufnahmeeinrichtung durchdringt

- S501: Bereitstellen einer Bilderzeugungsvorrichtung
- S502: Empfangen von Bilddaten
- S503: Bestimmen einer Reflexion, Prüfen von Reflexionskriterien
- S504: Ausgabe von Steuerdaten für Korrekturverfahren
- S505: Empfangen weiterer Bilddaten
- S506: Bestimmen einer Reflexion, Prüfen von Reflexionskriterien
- S507: Schleife zu Schritt S504
- S508: Ausgabe eines Bilddatensatzes

- H: Höhe der Bildaufnahmeeinrichtung
- S: Verstellweg der Bildaufnahmeeinrichtung

## Patentansprüche

1. Verfahren zum automatisierten Erstellen eines digitalen biometrischen Bildes von dem Gesicht einer Person (102, 202), umfassend die Schritte:
a) Bereitstellen einer Bilderzeugungsvorrichtung (104, 201) zum Erfassen von biometrischen Merkmalen einer Person (102, 202), mit einer Bildaufnahmeeinrichtung (106, 214) zum Aufnehmen von Bilddaten der Person (102, 202), (S501);
b) Empfangen von Bilddaten wenigstens eines Bildes und/oder einer Bildfolge der Person (102, 202) mittels einer Bildaufnahmeeinrichtung (106, 214), (S502);
c) Bestimmen mittels der Bilddaten einer in dem Bild und/oder der Bildfolge abgebildeten Reflexion (224), (S503);
d) Erzeugen von Steuerdaten zur Ausführung eines Korrekturverfahrens zur Minderung oder Beseitigung der Reflexion (224), (S504);
e) Empfangen von Bilddaten wenigstens eines weiteren Bildes und/oder einer weiteren Bildfolge der Person (102, 202), (S505).

2. Verfahren nach Anspruch 1, wobei das Verfahren umfasst:
- Bestimmen, ob das Bild wenigstens einem Reflexionskriterium genügt (S503);
- Bei Nichtgenügen des wenigstens einen Reflexionskriteriums, Erzeugen von Steuerdaten zur Ausführung eines Korrekturverfahrens zur Minderung oder Beseitigung der Reflexion (224), (S504);
- Bei Erfüllung des Reflexionskriteriums, Erzeugen eines Bilddatensatzes auf Basis des mindestens einen Bildes (S508).

3. Verfahren nach einem der vorhergehenden Ansprüche, wobei das wenigstens eine Reflexionskriterium eine oder mehrere der folgenden Eigenschaften umfasst:
- Vorhandensein einer Reflexion (224),
- Position der Reflexion (224), insbesondere auf einer Brille (222),
- die in der Bildaufnahmeeinrichtung (106, 214) empfangene Lichtintensität der Reflexion (224),
- die Ausdehnung der Reflexion (224),
- die aus der Belichtung resultierenden Eigenschaften des Bildes, insbesondere der Dynamikumfang.

4. Verfahren nach einem der vorhergehenden Ansprüche, wobei die Bilderzeugungsvorrichtung (104, 201) mit wenigstens einer Beleuchtungseinrichtung (207) bereitgestellt wird, mit der die Person (102, 202) während des Empfangs des Bildes beleuchtet wird.

5. Verfahren nach Anspruch 4, wobei als Teil des Korrekturverfahrens und/oder vor dem Empfangen des wenigstens einen ersten Bildes eine Einstellung der Beleuchtungseinrichtung (207) erfolgt.

6. Verfahren nach einem der vorhergehenden, wobei vor dem Empfangen des wenigstens einen ersten Bildes eine automatische Höheneinstellung der Bildaufnahmeeinrichtung (106, 214) und/oder der Beleuchtungseinrichtung (207) erfolgt.

7. Verfahren nach einem der vorhergehenden Ansprüche, wobei vor der Bestimmung der Reflexion eine Posenkontrolle und/oder eine Posenkorrektur erfolgt.

8. Verfahren nach einem der vorhergehenden Ansprüche, wobei das Korrekturverfahren eine Veränderung der Position der Bildaufnahmeeinrichtung (106, 214) und/oder der Beleuchtungseinrichtung (207) umfasst.

9. Verfahren nach einem der vorhergehenden Ansprüche, wobei die Bilderzeugungsvorrichtung mit einer Anzeigeeinrichtung (105, 215, 401) bereitgestellt wird und das Korrekturverfahren eine Ausgabe einer Aufforderung mittels der Anzeigeeinrichtung (105, 215, 401) an die Person (102, 202) umfasst.

10. Verfahren nach Anspruch 9, wobei die Aufforderung an die Person (102, 202) umfasst, einer auf der Anzeigeeinrichtung (105, 215, 401) angezeigten Attraktion (402) zu folgen.

11. Verfahren nach einem der vorhergehenden Ansprüche, wobei das Korrekturverfahren eine Bewegung der Anzeigeeinrichtung (105, 215, 401) in Höhenrichtung umfasst, insbesondere gemeinsam mit der Bildaufnahmeeinrichtung (106, 214) und/oder der Beleuchtungseinrichtung (207).

12. Verfahren nach einem der vorhergehenden Ansprüche, wobei eine Bildfolge, insbesondere ein Videostream empfangen wird.

13. Verfahren nach Anspruch 12, wobei der Empfang der Bildfolge während des Korrekturverfahrens andauert.

14. Verfahren nach einem der vorhergehenden Ansprüche, wobei
- zunächst eine Einstellung der Höhe der Bildaufnahmeeinrichtung (106, 214) sowie der Beleuchtungseinrichtung (207) erfolgt;
- anschließend der Empfang einer Bildfolge und/oder einer Videostreams gestartet wird;
- die Reflexion (224) bestimmt wird, insbesondere mittels eines trainierten Maschinenlernalgorithmus;
- die Attraktion (402) auf dem Display heruntergefahren und/oder die Bildaufnahmeeinrichtung (106, 214) nach oben bewegt wird;
- sobald ein empfangenes Bild dem wenigstens einem Reflexionskriterium genügt, wird mit der Erstellung eines digitalen biometrischen Bildes fortgefahren, insbesondere wird ein Datensatz für ein biometrisches Bild bereitgestellt.

15. Bilderzeugungsvorrichtung (104, 201) zum Erfassen von biometrischen Merkmalen einer Person (102, 202), mit einer Bildaufnahmeeinrichtung (106, 214) zum Aufnehmen von Bilddaten der Person (102, 202), mit Mitteln, insbesondere einer Datenverarbeitungseinrichtung, die ausgelegt und angepasst sind, die Verfahrensschritte nach einem der vorhergehenden Ansprüche auszuführen.
